# EUROPEAN PATENT SPECIFICATION

(11) **EP 0 840 047 B1**
(45) Date of publication and mention of the grant of the patent: **18.09.2002**
(21) Application number: 97308662.2
(22) Date of filing: 29.10.1997
(51) Int. Cl.: F16K 27/00, F16K 27/04, F15B 13/02, F16K 11/07

(54) **Pressure controlling valve to be attached to a base-mounted change valve**
Druckregelventil montierbar an einem auf einer Grundplatte angebauten Umschaltventil
Vanne de régulation de pression à fixer à une vanne de commutation étant montée sur une plaque de base

(30) Priority: 29.10.1996 JP 30357896
(43) Date of publication of application: 06.05.1998
(73) Proprietor: SMC CORPORATION, Minato-ku Tokyo 105 (JP)
(72) Inventor: Tajima, Masamichi, c/o SMC Corp. Tsukuba, Yawara-mura, Tsukuba-gun, Ibaraki (JP); Akimoto, Takashi, c/o SMC Corp. Tsukuba, Yawara-mura, Tsukuba-gun, Ibaraki (JP); Katsuta, Hiroyuki, c/o SMC Corp. Tsukuba, Yawara-mura, Tsukuba-gun, Ibaraki (JP)
(74) Representative: Findlay, Alice Rosemary

(56) References cited:
- US-A- 4 267 862
- US-A- 4 453 565
- US-A- 4 770 210
- PATENT ABSTRACTS OF JAPAN vol. 97, no. 8, 29 August 1997 & JP 09 100922 A (NIPPON PISUKO:KK), 15 April 1997,
- PATENT ABSTRACTS OF JAPAN vol. 97, no. 1, 31 January 1997 & JP 08 247320 A (SMC CORP), 27 September 1996,
- PATENT ABSTRACTS OF JAPAN vol. 4, no. 105 (M-023), 26 July 1980 & JP 55 063065 A (TOYOOKI KOGYO CO LTD), 12 May 1980,
- PATENT ABSTRACTS OF JAPAN vol. 4, no. 164 (M-041), 14 November 1980 & JP 55 112461 A (HITACHI LTD), 30 August 1980,

## Description

The present invention relates to a pressure controlling valve to be attached to a change valve mounted on a base in order to adjust the pressure of the fluid discharged from the change valve as required.

To drive a fluid pressure device with a pressure fluid such as compressed air that is supplied through a change valve, the fluid pressure to be supplied to the fluid pressure device should be controlled in some cases, depending on the pressure setting or operating condition of the fluid pressure device. To control the fluid pressure, in general, a pressure control valve such as a pressure reducing valve should be provided inside the pipes that connect the output port of the change valve with the fluid pressure device.

However, if such a pressure controlling valve is connected to the change valve through piping, the piping work will be not only troublesome, but also require considerable installation space since common pressure controlling valves are generally large. This problem is the result of having to connect the same number of pressure controlling valves as change valves, particularly when the plurality of change vales is mounted on a base structural element such as a manifold and subplate having a piping port. It may be difficult to attach the pressure controlling valves, depending on the number of change valves. Moreover, this problem has become particularly acute because of the recent miniaturization of change valves.

In order to solve this problem, a miniaturized change valve is proposed in Japanese Patent Application No. 1996-219405. In this application, a plurality of communicating channels that communicate with the corresponding ports of the change valve and the base, and the pressure controlling valve ports to accommodate a pressure controlling valve stem are functionally combined and set up in overlapping positions inside the body of the change valve in order to utilize the inner space of the change valve move effectively. As a result, the width of the body of the pressure controlling valve was successfully reduced to that of the change valve.

Nevertheless, said change valve still has room for improvement in setting up fluid channels, and such improvement would enable further miniaturization of the change valve, as well as simplify its configuration.

US-A-4453565 describes a four-way valve including a valve base, a valve body mounted on a base and a valve cover mounted on the top of the valve body. The valve can be used as a stacking valve. A pressure regulating valve may be selectively mounted on the top of the valve cover and each of the exhaust passageways in the valve may be selectively provided with a flow control valve. The inlet air passages in the valve body are constructed and arranged to convey the inlet air under pressure up around the main valve spool bore and up to the pressure regulating valve, and then down to the main valve spool bore with secondary regulated air pressure. The exhaust air passages are arranged in the valve body so that the flow control valves are in a position where the exhaust air is flowing downwardly through the valve body. The valve includes pilot air passages which may be provided selectively with either external pilot air or internal pilot air.

US-A-4770210 describes a manifold stacking base which may selectively provide an integral flow control function, with or without a pressure regulation function, for a fluid pressure valve system, without the need for a sandwich plate or an interface plate between the base and the valve in said system.

An aim of the present invention lies in further miniaturization of a base-mounted change valve and simplification of its configuration by improving the setting up of channels inside the body of the change valve.

The present invention provides a small pressure controlling valve that can be installed by inserting it directly into the space between the change valve that changes the pressure fluid flow direction and the base to supply a pressure fluid for the change valve.

According to the present invention a valve is mounted in use between a change valve that changes the direction of a pressure fluid and a base to supply pressure fluid to the change valve by inserting it directly between the change valve and the base, the valve comprising a valve body, at least one open/shut communication channel which can communicate directly with a pair of corresponding ports of the change valve and the base through a valve seat and at least one direct channel that communicates directly with another pair of corresponding ports, the channels extending through the valve body and being arranged side by side, at least one valve port mounted in the valve body in a manner such that it crosses the open/shut communication channel and the direct communication channel, the valve port communicating with the open/shut communication channel and penetrating into the direct communication channel such as to provide the necessary channel cross-section for flow therebetween, a valve stem installed in the valve port in a manner that enables free movement, a valve structural element mounted on the valve stem for opening and closing the valve seat, a spring acting on the valve stem and a pair of chambers, characterised in that the valve is a pressure controlling valve; in that the valve body is of nearly the same width as the change valve; in that the chambers comprise a pressure controlling chamber provided at one end of the pressure controlling valve stem and a resetting chamber provided at the other end of the pressure controlling valve stem, and in that the valve further comprises a pressure controlling piston mounted in the pressure controlling chamber in a manner that enables free movement and a pressure controlling spring that biases the pressure controlling piston towards the pressure controlling valve stem, a resetting spring mounted in the resetting chamber such that the resetting spring biases the pressure controlling valve stem towards the pressure control piston, and at least one lead port formed inside the pressure controlling valve stem and a lead clearance formed between the outer region of the pressure valve stem and the pressure controlling valve port which communicate with the pressure controlling chamber and the resetting chamber and act as channels to guide the pressure fluid for controlling pressure to each chamber.

In the pressure controlling valve configured as above, a plurality of communication channels to communicate with corresponding ports of the change valve and the base, and pressure controlling valve port to accommodate the pressure controlling valve stem, are functionally combined and set up in overlapping positions inside the body of the pressure controlling valve. In addition, the fluid channels that guide the pressure fluid for controlling pressure to said pressure controlling room and resetting room by communicating those rooms reciprocally consist of a lead port provided inside the pressure controlling valve stem and a lead clearance formed between the outer region of the pressure controlling valve stem and pressure controlling valve port. As a result, a plurality of fluid channels and parts can be rationally and compactly incorporated inside a valve body that is small in width and height, which leads to further miniaturization of the change valve.

According to one of the embodiments of the present invention, said open/shut communication channel is a supply communication channel that connects supply ports of the base and the change valve. It consists of a first part that communicates with the supplying port of the base and is open to said pressure controlling valve port, and a second part that communicates with the supplying port of the change valve and is open to the pressure controlling valve port at a different location from the first part. The second part communicates with the pressure controlling room and the resetting room through said lead port and lead clearance.

According to another embodiment of the present invention, the open/shut communication channel is a supplying communication channel that connects the supplying ports of the base and the change valve. At the same time, the direct communication channel contains the communication channel for discharges that connects the discharging ports of the base and the change valve and the communication channel for outputs that communicates with the output port of the change valve.

Preferably, the direct communication channels for outputs communicate with the pressure controlling room and the resetting room through the lead port and lead clearance. The lead port is provided to enable communications with the resetting room, and the lead clearance is provided to enable communications with the pressure controlling room.

The invention will now be described by way of example and with reference to the accompanying drawings in which:
FIG. 1 is a cross sectional view of the pressure controlling valve mounted between the base and the change valve asdescribed in the first embodiment of the present invention.
FIG. 2 is an enlarged view of the pressure controlling valve as described in the first embodiment.
FIG. 3 is an enlarged view of important parts as described in FIG. 2.
FIG. 4 is a cross sectional view in the IV-IV line as shown in FIG. 2.
FIG. 5 is a cross sectional view in the V-V line as shown in FIG. 2.
FIG. 6 is a cross sectional view in the VI-VI line as shown in FIG. 2.
FIG. 7 is a cross sectional view of the invention in the second embodiment of the present invention.
FIG. 8 is a cross sectional view on the VIII-VIII line in FIG. 7.
FIG. 9 is a cross sectional view of the third embodiment of the present invention.
FIG. 10 A-E is a cross sectional view of an example of the deformation of the pressure controlling valve stem and a pressure controlling piston.

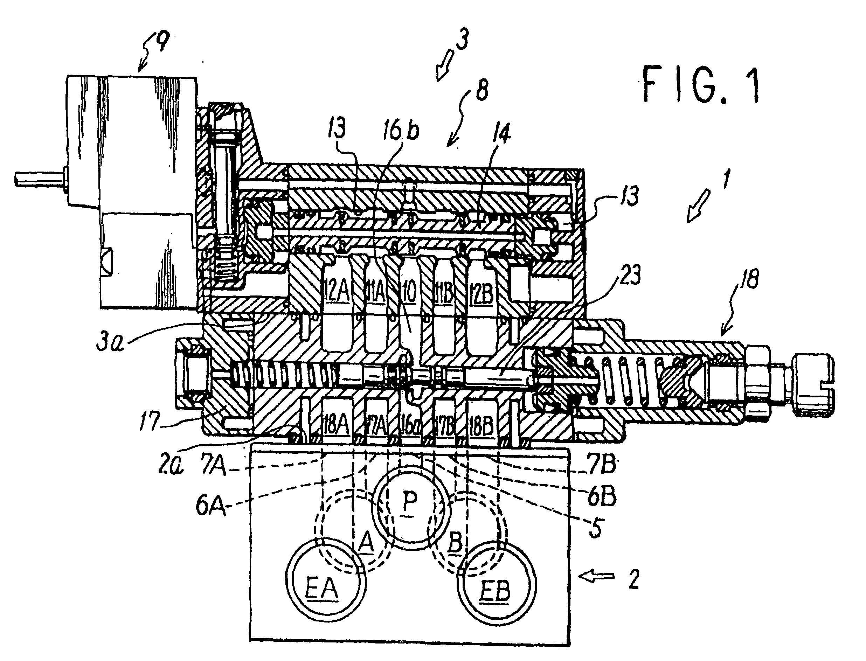

FIGURE 1 shows how a pressure controlling valve 1 is directly installed between base 2 and change valve 3. These parts 1, 2 and 3 are fixed with proper fixing devices such as fixing screws, which are not illustrated.

Base 2 is the general term for structural elements such as a manifold or subplate having a piping port, and is constructed so that one or more change valves can be incorporated in it. The illustration is of a simple base to be used by incorporating one change valve 3. Base 2 is provided with compressed air supplying port P, first discharging port EA and second discharging port EB at one side, and first outputting port A and second outputting port B at the other side. The upper face of base 2 features the flat pressure controlling valve mounting face 2a, on which supplying port 5 that communicates separately with each port above, first outputting port 6A, second outputting port 6B, first discharging port 7A and second discharging port 7B are open in a row.

Change valve 3 is a single pilot system change valve, provided with main valve 8, and pilot valve 9 of the electromagnetic operation system. The lower part of main valve 8 features a flat, controlling valve mounting face 3a, on which supplying port 10, first outputting port 11A, second outputting port 11B, first discharging port 12A and second discharging port 12B are open in a row. Inside the valve body is valve port 13, to which each port is open, and valve stem 14 is inserted into valve port 13 to enable airtight sliding.

In the operation of change valve 3 above, when the pilot fluid is output from pilot valve 9 to main valve 8 by solenoid magnetization, valve stem 14 moves to the right as viewed in the drawing, supply port 10 and first output port 11A communicate with each other, and second outputting port 11B and second discharging port 12B communicate with each other. If the solenoid magnetization is cancelled, the pilot fluid is discharged from main valve 8. Valve stem 14 is reset to the condition as illustrated, by the pilot valve and the internal pilot fluid supplied to the room opposite the pilot valve. Then supplying port 10 and second outputting port 11B communicate with each other, and first outputting port 11A and first discharging port 12A communicate with each other.

Change valve 3, however, is not limited to the single pilot system change valve as illustrated; rather, it can be either a double pilot system change valve or a direct-driven change valve.

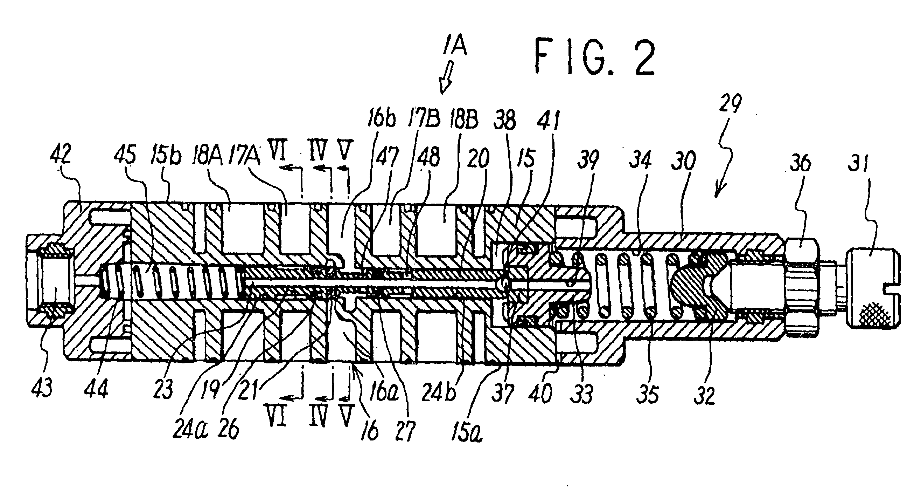

As illustrated in FIGURE 2, pressure controlling valve 1A in the first embodiment of the present invention is provided with slender valve body 15 having a rectangular cross section that is same as change valve 3 in width. The upper and lower surfaces of valve body 15 are marked 15a and 15b on which base 2 and change valve 3 are mounted, respectively. Thus, pressure controlling valve 1A can be mounted between base 2 and change valve 3 on these mounting surfaces.

Inside valve body 15, communication channels 16, 17A, 17B, 18A and 18B that connect the corresponding ports of change valve 3 and base 2 are formed between the upper and lower mounting faces 15a and 15b. Pressure controlling valve port 19 is provided in the manner in which it crosses these communication channels. In to pressure controlling valve port 19, pressure controlling valve stem 20 is inserted to enable free movements.

Of all the aligning channels 16, 17A, 17B, 18A and 18B, communication channel 16 that connects supply port 5 of base 2 and supplying port 10 of change valve 3 is a free-open/shut communication channel having pressure controlling valve seat 25 in-between. Outputting channels 17A and 17B that connect output ports 6A and 6B, and 11A and 11B, respectively, and discharging channels 18A and 18B that connect discharging ports 7A and 7B, and 12A and 12B, respectively, are all direct communication channels that connect ports directly.

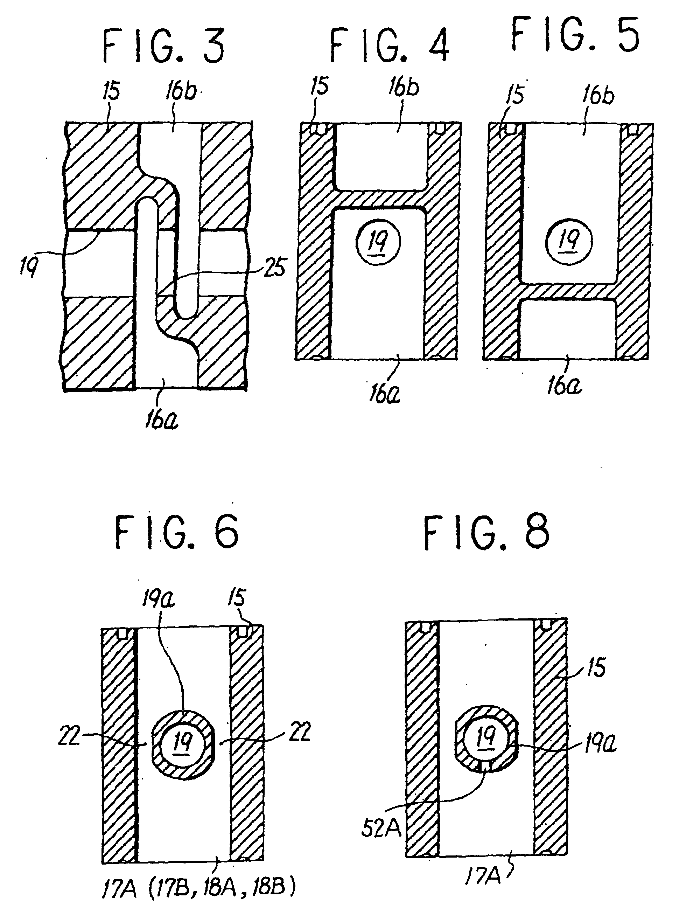

As is also seen in FIGURE 3, open/shut communication channel 16 consists of first part 16a, which communicates with supply port 5 of base 2 and is open to pressure controlling valve port 19, as well as second part 16b, which communicates with supply port 10 of change valve 3 and is open to pressure controlling valve port 19 at a different location from first part 16a. Pressure controlling valve seat 25 is mounted on pressure controlling port 19 between first part 16a and second part 16b, which is open or closed from first part 16a side by pressure controlling valve structural element 21 mounted to pressure controlling valve stem 20.

As is also seen in FIGUREs. 4, 5 and 6, pressure controlling valve port 19 communicates with first part 16a and second part 16b of open/shut communication channel 16 reciprocally, but does not communicate with direct communication channels 17A, 17B, 18A and 18B. It penetrates the center of these direct communication channels, being surrounded by cylindrical wall 19a and providing clearance 22 that is necessary for allowing compressed air to flow to the both side. As shown in FIGURE 6, a clearance on both side of cylindrical wall 19 can be maximized by cutting off the faces on both sides of cylinder wall 19a.

Thus, each communication channel 16, 17A, 17B, 18A and 18B as well as pressure controlling valve port 19 are provided inside valve body 15, crossing each other, which leads to the efficient setting up of these channels in the small space. As a result, the design of valve body 15 is small and functional.

Pressure controlling part 29 is formed at one end of valve body 15. Pressure controlling part 29 has three parts; pressure controlling room 38 that is formed between valve body 15 and cover 30 on the pressure controlling side so that pressure controlling part 29 can connect to pressure controlling valve port 19, pressure controlling piston 33 accommodated in pressure controlling room 38 to enable free sliding, and pressure controlling spring 35 mounted between pressure controlling piston 33 and spring seat 32 in spring room 34. Pressure controlling spring 35 applies a force to pressure controlling piston 33 toward the side of pressure controlling valve stem 20. The force applied by pressure controlling spring 35 can be adjusted by moving adjusting screw 31. The item numbered 36 is a lock nut to lock adjusting screw 31.

Pressure controlling piston 33 is provided with discharge port 39 that communicates pressure controlling room 38 with the air through spring room 34 and respiratory port 40. At the same time, it has relief valve structural element 37 made of elastic structural element that opens discharge port 39 to pressure controlling room 38, and discharge port 39 on relief valve structural element 37 is opened or shut by steel ball 41 mounted at the end of pressure controlling stem 20.

At the other end of valve body 15, resetting roam 45 that connects to pressure controlling valve port 19 is formed between valve body 15 and resetting-side cover 42, and reset spring 44 that applies a force to controlling valve stem 20 toward the side of pressure controlling piston 33 is provided inside the resetting room 45. The force applied by resetting spring 44 is smaller than that by pressure controlling spring 35.

Resetting room 45 communicates with detecting port 43 mounted to resetting-side cover 42 through ports, and the controlled air pressure can be detected with a pressure gauge (not illustrated) mounted to detecting port 43.

Inside pressure controlling valve stem 20, lead port 23 that penetrates in the axis direction is formed. The end of lead port 23 on the pressure controlling room 38 side is blocked by ball 41. A lead clearance is formed between the outer region of pressure controlling valve stem 20 and pressure controlling valve port 19 so that compressed air can flow along the entire length of pressure controlling valve stem 20. Clearance part 24a on one side from first part 16a of open/shut communication channel 16 to resetting room 45 is sealed by first seal structural element 26 mounted to pressure controlling valve stem 20, and clearance part 24b on the other side from second part 16b to pressure controlling room 38 is sealed by second seal structural element 27.

Lead port 23 of pressure controlling valve stem 20 and second part 16b of open/shut communication channel 16 communicate through first guiding port 47 mounted to pressure controlling valve stem 20. Lead port 23 and clearance part 24b communicate through second guiding port 48 mounted pressure controlling valve stem 20 in a position on the side of pressure controlling room 38 rather than second seal structural element 27.

The first seal structural element 26 is lip-shaped, while its seal is directional and has a Y-shaped or V-shaped cross section. Said structural element is installed to stop the compressed air flowing from first part 16a of open/shut communication channel 16 to resetting room 45, but it allows the compressed air to flow in the opposite direction.

In pressure controlling valve 1A, having said configuration, as shown in the first example of embodiment of the present invention, when compressed air is not supplied from supplying port P of base 2 to open/shut communication channel 16, the force applied by pressure controlling spring 35 moves pressure controlling piston 33 and pressure controlling valve stem 20 to the left as seen in the drawing attached, and pressure controlling valve structural element 21 opens pressure controlling valve seat 25. Therefore, first part 16a and second part 16b of open/shut communication channel 16 communicate with each other, and supplying port P of base 2 and supplying port 10 of change valve 3 communicate with each other.

If the compressed air is supplied to supply port P, the compressed air flows into supplying port 10 of change valve 3 through open/shut communicating channel 16. At the same time, the compressed air flows into lead port 23 through first guiding port 47, then into resetting room 45. It also flows into pressure controlling room 38 through clearance part 24b from second guiding port 48.

As a result, pressure controlling piston 33 is pushed back by the working force of the air pressure applied on piston 33, which is combined with the force of resetting spring 44 applied through pressure controlling valve stem 20. It goes back up to the position where the combined forces and the force applied by pressure controlling spring 35 keep the balance, while compressing pressure controlling spring 35. When the said forces balance, pressure control valve structural element 21 shuts pressure controlling valve seat 25, and first part 16a and second part 16b of open/shut communication channel 16 are shut each other down.

If the working force of air pressure applied to pressure controlling piston 33 is larger than the force applied by pressure controlling spring 35, pressure controlling piston 33 goes further backward. Therefore, relief valve structural element 37 separates from ball 41 to open discharging port 39, the compressed air in pressure controlling room 38 is discharged externally, and the balance between the working force of said air pressure and the force applied by pressure controlling spring 35 is maintained.

Thus, the air pressure (output air pressure) on the side of second part 16b of open/shut communication channel 16 can be adjusted to the pressure set by pressure controlling spring 35. The air pressure can be detected by the pressure gauge installed at detecting port 43.

The setting of the air pressure can be changed by moving pressure controlling screw 31 forward or backward and adjusting the force applied by pressure controlling spring 35.

If supply port P of base 2 is open to the outside, air in resetting room 45 flows into first part 16a by pushing first seal structural element 26 open. Thus, the balance of the forces applied on the both side of pressure controlling valve stem 20 is lost, conversion of the pressure controlling valve stem 20 opens pressure controlling valve seat 25 to discharge the remaining pressure through pressure controlling valve seat 25.

In the first embodiment of the present invention, second part 16b of open/shut communication channel 16 can be directly communicated with clearance part 24b by omitting second seal structural element 27. In this case, second guiding port 48 can be omitted.

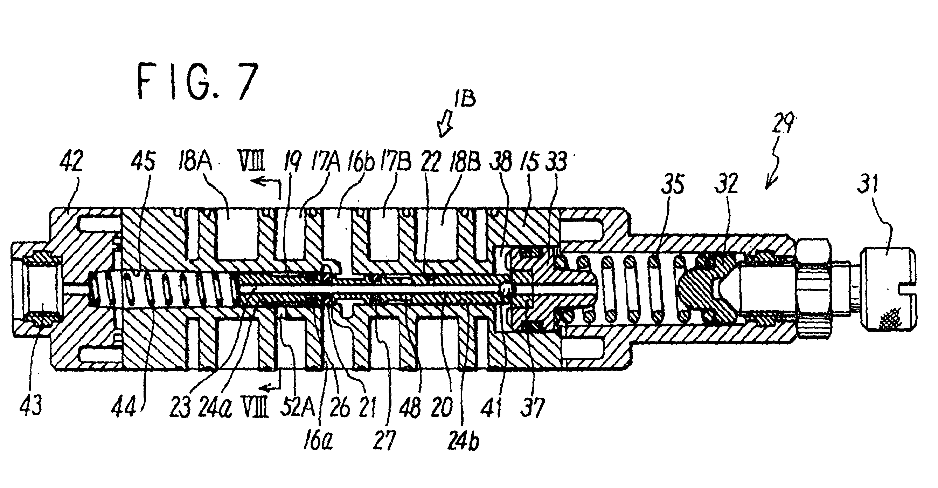

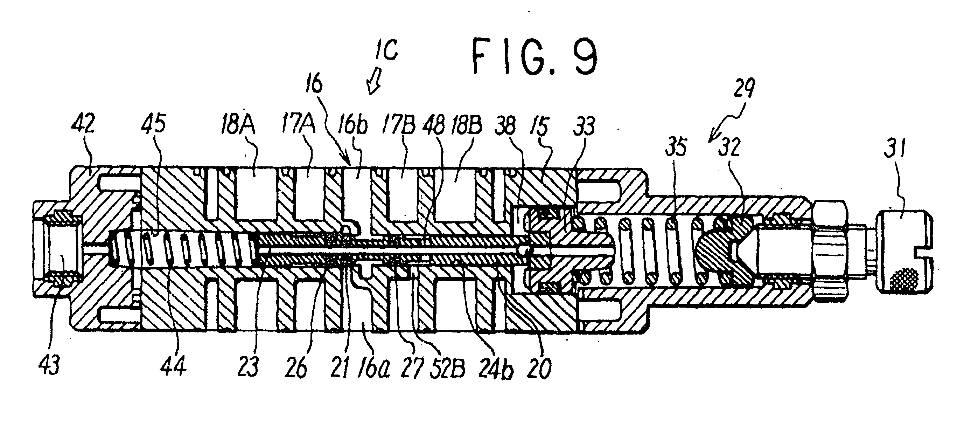

FIGURE 7 shows the second embodiment of the pressure controlling valve, which differs from the first in that pressure controlling valve 1B takes compressed air for controlling pressure from direct communication channel 17A. In pressure controlling valve 1B, port 52A communicating with pressure controlling valve port 19 is mounted to first direct communication channel for output 17A that connects first outputting port 6A of base 2 and first outputting port 11A of change valve 3. Compressed air for controlling pressure from first direct communication channel for output 17A is guided to pressure controlling room 38 through lead port 52A, clearance part 24a of the outside region of pressure controlling stem 20, resetting room 45, lead port 23, second guiding port 48 and clearance part 24b, as shown in FIGURE 8. Therefore, in the second embodiment of the present invention, first guiding port 47 as shown in the first example is not formed on pressure controlling valve stem 20.

As explained above, the channel to guide compressed air for controlling pressure is the only difference between the first and second embodiments As the method for controlling pressure in the second embodiment is actually the same as that in the first, the main components have the same numbers as in the first embodiment of the present invention, on which explanation is omitted.

FIGURE 9 shows the third embodiment of the pressure controlling valve in the present invention. Pressure controlling valve 1C in the third embodiment
differs in the guiding of the compressed air for controlling pressure from pressure controlling valve 1B in the second embodiment of this invention. Therefore, in pressure controlling valve 1C, port 52B that communicates with pressure controlling valve port 19 is mounted to second direct communicating channel for output 17B that connects second output port 6B of base 2 to second output port 11B of change valve 3. Compressed air for controlling pressure of second direct communication channel for output 17B is guided from port 52B to pressure controlling room 38 through clearance part 24b of the outside region of pressure controlling stem 20. At the same time, the compressed air is guided to resetting room 45 through second guiding port 48 and lead port 23. Therefore, in the third embodiment of the present invention, first lead port 47 shown in the first example is not formed on pressure controlling valve stem 20.

As explained above, the channel to guide compressed air for controlling pressure is the only difference between the first and third embodiments As the method for controlling pressure in the third embodiment of this invention is actually the same as that in the first, the main components have the same numbers as in the first example of embodiment of the present invention, on which explanation is omitted.

In each above-referred embodiment of the present invention, base 2 and change valve 3 are formed with output port 6A and 6B, and 11A and 11B respectively because base 2 is provided with output port P, and pressure controlling valves 1A, 1B and 1C are equipped with direct communication channels for output 17A and 17B that connect to their output ports. Output port P, however, may be mounted to change valve 3 rather than to base 2, in which case compressed air for controlling pressure can be collected using outputting ports 6A and 6B of change valve 3 and direct communication channels for output 17A and 17B of pressure controlling valve 1A, 1B and 1C, even if base 2 does not have an output port. In this case, the end of communication channel on the base 2 side is sealed by a gasket.

In the execution example illustrated above, change valve 3 is a 5-port valve, and pressure controlling valves 1A, 1B and 1C have five communication channels accordingly. The change valve, however, can also be a 3-port valve. In this case, the pressure controlling valve will have three communication channels.

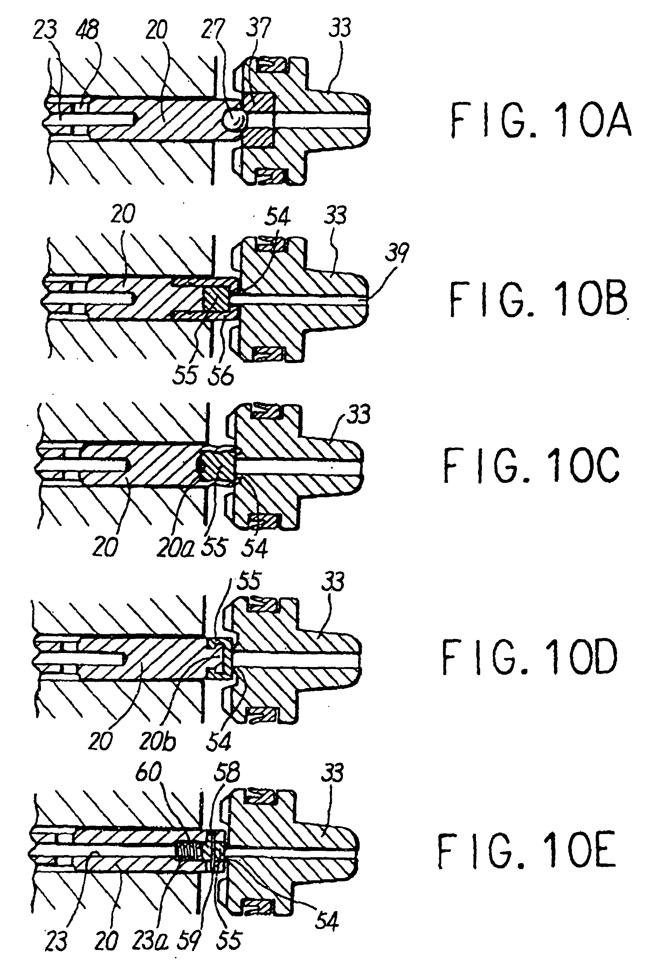

FIGURES 10A to E show examples of deformed pressure controlling valve stem 20 and pressure controlling piston 33.

The first deformed sample shown in FIGURE 10A is different from other examples in that lead port 23 formed in pressure controlling valve stem 20 reaches up to second lead port 48 without penetrating up to pressure controlling room 38, and ball 27 is mounted to the end of pressure valve stem 20 without any connection to lead port 23.

In the second deformed sample shown in FIGURE 10B, relief valve seat 54 is formed at the end of discharging port 39 of pressure controlling piston 33, and relief valve structural element 55 is mounted at the end of pressure controlling valve stem 20 with cap 56.

In the third deformed sample shown in FIGURE 10C, relief valve structural element 55 is directly mounted by press fitting or adhering informal concave 20a at the end of pressure controlling valve stem 20.

In the fourth deformed sample shown in FIGURE 10D, relief valve structural element 55 is mounted by press fitting or adhering outside mounting part 20b at the end of pressure controlling valve stem 20.

In the fifth deformed sample shown in FIGURE 10E, the diameter of lead port 23 that penetrates pressure controlling valve stem 20 is enlarged at both ends, and groove 58 is formed at the enlarged diameter area 23a in the same direction with the diameter. Relief valve structural element 55 to open/shut relief valve seat 54 of pressure controlling piston 33 is mounted to enlarged diameter area 23a with pin 59 inserted into groove 58 so that it can move slightly to the right and to the left as seen in the drawing. It is pushed toward relief valve seat 54 by spring 60.

Thus, in the present invention, a plurality of communication channels to communicate with corresponding ports of the change valve and the base, and a pressure controlling valve port to accommodate the pressure controlling valve stem are functionally combined and set up in overlapping positions inside the body of the pressure controlling valve. In addition, the fluid channels to guide the pressure fluid for controlling pressure to said pressure controlling room and resetting room by communication those rooms reciprocally consist of a lead port provided inside the pressure controlling valve stem and a lead clearance formed between the outer region of the pressure controlling valve stem and pressure controlling valve port. As a result, a plurality of fluid channels and parts can be incorporated rationally and compactly inside a valve body that is narrow and short width, which leads to further miniaturization of the change valve.

## Claims

1. A valve (1) mounted in use between a change valve (3) that changes the direction of a pressure fluid and a base (2) to supply pressure fluid to the change valve (3), the valve (1) being mounted by inserting it directly between the change valve (3) and the base (2), the valve (1) comprising a valve body (15), at least one open/shut communication channel (16) which can communicate directly with a pair of corresponding ports (5, 10) of the change valve (3) and the base (2) through a valve seat (25) and at least one direct channel (17A, 17B, 18A, 18B) that communicates directly with another pair of corresponding ports (6A, 6B, 7A, 7B, 11A, 11B, 12A, 12B), the channels (16, 17A, 17B, 18A, 18B) extending through the valve body (15) and being arranged side by side, at least one valve port (19) mounted in the valve body (15) in a manner such that it crosses the open/shut communication channel (16) and the direct communication channel (17A, 17B, 18A, 18B), the valve port (19) communicating with the open/shut communication channel (16) and penetrating into the direct communication channel (17A, 17B, 18A, 18B) such as to provide the necessary channel cross-section for flow therebetween, a valve stem (14) installed in the valve port (19) in a manner that enables free movement, a valve structural element (21) mounted on the valve stem (14) for opening and closing the valve seat (25), a spring acting on the valve stem (14) and a pair of chambers (38, 45), **characterised in that** the valve is a pressure controlling valve (1); **in that** the valve body (15) is of nearly the same width as the change valve (3); **in that** the chambers comprise a pressure controlling chamber (38) provided at one end of the pressure controlling valve stem (14) and a resetting chamber (45) provided at the other end of the pressure controlling valve stem (14), and **in that** the valve further comprises a pressure controlling piston (33) mounted in the pressure controlling chamber (38) in a manner that enables free movement and a pressure controlling spring (35) that biases the pressure controlling piston (33) towards the pressure controlling valve stem (14), a resetting spring (44) mounted in the resetting chamber (45) such that the resetting spring (44) biases the pressure controlling valve stem (14) towards the pressure control piston (33), and at least one lead port (23) formed inside the pressure controlling valve stem (14) and a lead clearance (24a, 24b) formed between the outer region of the pressure valve stem (14) and the pressure controlling valve port (19) which communicate with the pressure controlling chamber (38) and the resetting chamber (45) and act as channels to guide the pressure fluid for controlling pressure to each chamber (38, 45).

2. A pressure controlling valve (1) as claimed in Claim 1 wherein the open/shut communication channel (16) is a supply communication channel, connecting the supply ports (5,10) of the base (2) and the change valve (3), the open/shut communicating channel (16) comprising a first part (16a) communicating with the supply port (5) of the base (2) and open to the pressure controlling valve port (9) and a second part (16b) communicating with the supply port (10) of the change valve (3) and open to the pressure controlling valve port (9) at a different location from the first part (16a), and the open/shut communication channel (16) having the pressure controlling seat (25) between the first and second parts (16a, 16b) with the second part (16b) communicating with the pressure controlling chamber (38) and resetting chamber (45) through the lead port (23) and lead clearance (24a, 24b).

3. A pressure controlling valve as claimed in Claim 1 wherein the open/shut communication channel (16) is a supply channel connecting the supply ports (5, 10) of the base (2) and the change valve (3) and the at least one direct communication channel (17A, 17B, 18A, 18B) is a discharge channel (17A, 17B) that connects the discharge ports (6A, 6B, 11A, 11B) of the base (2) and the change valve (3) and a communication channel (52A, 52B) which communicates with the discharge port (6A, 6B) of the change valve (2) and the discharge channel (17A, 17B) communicates with the pressure controlling chamber (38) and the resetting chamber (45) through the lead port (23) and the lead clearance (24a, 24b).

4. A pressure controlling valve (1) as claimed in any preceding claim wherein the lead port (23) communicates with the resetting chamber (45) and the lead clearance (24a, 24b) communicates with the pressure controlling chamber (38).

5. A pressure controlling valve as claimed in any preceding claim wherein the pressure controlling piston (33) has a discharge port (39) to open the pressure controlling chamber (38) to the external environment, and structural elements (27, 41, 55, 60) to open or shut the discharge port (39) are mounted at the end of the pressure controlling valve stem (20).

## Patentansprüche

1. Ein einsatzmäßig zwischen einem Umschaltventil (3), das die Richtung eines Druckfluids ändert, und einem Sockel (2) montiertes Ventil (1) zur Speisung von Druckfluid zum Umschaltventil (3), wobei das Ventil (1) direkt zwischen dem Umschaltventil (3) und dem Sockel (2) montiert ist und wobei zu dem Ventil (1) gehören: ein Ventilkörper (15), mindestens ein Verbindungskanal mit den Stellungen offen/geschlossen (16), der in direkter Verbindung mit einem Paar zugehöriger Öffnungen (5, 10) des Umschaltventils (3) und über einen Ventilsitz (25) mit dem Sockel (2) steht, und mindestens ein direkter Kanal (17A, 17B, 18A, 18B), der in direkter Verbindung mit einem weiteren Paar zugehöriger Öffnungen (6A, 6B, 7A, 7B, 11A, 11B, 12A, 12B) steht, wobei die Kanäle (16, 17A, 17B, 18A, 18B) durch den Ventilkörper (15) verlaufen und mit ihren Seiten aneinander grenzend angeordnet sind, wobei mindestens eine Ventilöffnung (19) so im Ventilkörper (15) angebracht ist, dass sie den Verbindungskanal mit den Stellungen offen/geschlossen (16) und den direkten Verbindungskanal (17A, 17B, 18A, 18B) kreuzt, wobei die Ventilöffnung (19) mit dem Verbindungskanal mit den Stellungen offen/geschlossen (16) in Verbindung steht und so in den direkten Verbindungskanal (17A, 17B, 18A, 18B) hineinragt, dass dazwischen der erforderliche Kanalquerschnitt zur Gewährleistung des Durchflusses entsteht, eine zur Gewährleistung der freien Bewegung in der Ventilöffnung (19) montierte Ventilspindel (14), ein zur Öffnung und Schließung des Ventilsitzes (25) an der Ventilspindel (14) montiertes Ventilbauelement (21), eine auf die Ventilspindel (14) wirkende Feder und ein Paar Kammem (38, 45), **dadurch gekennzeichnet, dass** das Ventil ein Druckregelventil (1) ist; dass der Ventilkörper (15) fast die gleiche Breite wie das Umschaltventil (3) hat; dass zu den Kammern eine an einem Ende der Druckregelventilspindel (14) vorgesehene Druckregelkammer (38) und eine am anderen Ende der Druckregelventilspindel (14) vorgesehene Rückstellkammer (45) gehören, und dass zu dem Ventil weiterhin ein Druckregelkolben (33), der so in der Druckregelkammer (38) montiert ist, dass die freie Beweglichkeit gewährleistet ist, und eine Druckregelfeder (35), die den Druckregelkolben (33) gegenüber der Druckregelventilspindel (14) in Vorspannung bringt, eine Rückstellfeder (44), die so in der Rückstellkammer (45) montiert ist, dass die Rückstellfeder (44) die Druckregelventilspindel (14) gegenüber dem Druckregelkolben (33) in Vorspannung bringt, und mindestens eine innerhalb der Druckregelventilspindel (14) gebildete Leitöffnung (23) und einen zwischen dem Außenbereich der Druckventilspindel (14) und der Druckregelventilöffnung (19) gebildeten Leitfreiraum (24a, 24B), die mit der Druckregelkammer (38) und der Rückstellkammer (45) in Verbindung stehen und die Funktion von Kanälen zur Führung des Druckfluids zur Regelung des Druckes zu den einzelnen Kammern (38, 45) haben, gehören.

2. Druckregelventil (1) nach Anspruch 1, in welchem der Verbindungskanal mit den Stellungen offen/geschlossen (16) ein Speiseverbindungskanal ist, der die Speiseöffnungen (5, 10) des Sockels (2) und das Umschaltventil (3) verbindet, wobei zu dem Verbindungskanal mit den Stellungen offen/geschlossen (16) ein erstes Teil (16a), das mit der Speiseöffnung (5) des Sockels (2) in Verbindung steht und zur Druckregelventilöffnung (9) hin offen ist, und ein zweites Teil (16b), das mit der Speiseöffnung (10) des Umschaltventils (3) in Verbindung steht und an einer anderen Stelle als das erste Teil (16a) zur Druckregelventilöffnung (9) hin offen ist, gehören, und wobei zu dem Verbindungskanal mit den Stellungen offen/geschlossen (16) der Druckregelsitz (25) zwischen dem ersten und dem zweiten Teil (16a, 16b) gehört, wobei das zweite Teil (16b) über die Leitöffnung (23) und den Leitfreiraum (24a, 24b) mit der Druckregelkammer (38) und der Rückstellkammer (45) in Verbindung steht.

3. Druckregelventil (1) nach Anspruch 1, in welchem der Verbindungskanal mit den Stellungen offen/geschlossen (16) ein Speisekanal ist, der die Speiseöffnungen (5, 10) des Sockels (2) und das Umschaltventil (3) verbindet, und mindestens ein direkter Verbindungskanal (17A, 17B, 18A, 18B) ein Auslasskanal (17A, 17B), der die Auslassöffnungen (6A, 6B, 11A, 11B) des Sockels (2) und das Umschaltventil (3) verbindet, und ein Verbindungskanal (52A, 52B) ist, der mit der Auslassöffnung (6A, 6B) des Umschaltventils (2) in Verbindung steht, und der Auslasskanal (17A, 17B) über die Leitöffnung (23) und den Leitfreiraum (24a, 24b) mit der Druckregelkammer (38) und der Rückstellkammer (45) in Verbindung steht.

4. Druckregelventil (1) nach einem der vorgenannten Ansprüche, in welchem die Leitöffnung (23) mit der Rückstellkammer (45) und der Leitfreiraum (24a, 24b) mit der Druckregelkammer (38) in Verbindung steht.

5. Druckregelventil (1) nach einem der vorgenannten Ansprüche, in welchem der Druckregelkolben (33) eine Auslassöffnung (39) besitzt, die die Druckregelkammer (38) nach außen öffnet, und Bauelemente (27, 41, 55, 60) zur Öffnung oder Schließung der Auslassöffnung (39) am Ende der Druckregelventilspindel (20) montiert sind.

## Revendications

1. Une soupape (1) montée, pour l'utilisation, entre une soupape de changement (3) qui change la direction d'un fluide sous pression et une base (2) pour fournir le fluide sous pression à la soupape de changement (3), la soupape (1) étant montée par insertion directe entre la soupape de changement (3) et la base (2), la soupape (1) comprenant un corps de soupape (15), au moins un canal de communication tout ou rien (16) qui peut communiquer directement avec une paire d'orifices correspondants (5, 10) de la soupape de changement (3) et la base (2) au moyen d'un siège de soupape (25) et au moins un canal à passage direct (17A, 17B, 18A, 18B) qui communique directement avec une autre paire d'orifices correspondants (6A, 6B, 7A, 7B, 11A, 11B, 12A, 12B), les canaux (16, 17A, 17B, 18A, 18B) se prolongeant à travers le corps de soupape (15) et étant agencés côte à côte, au moins un orifice de soupape (19) monté dans le corps de soupape (15) de sorte à traverser le canal de communication tout ou rien (16) et le canal de communication directe (17A, 17B, 18A, 18B), l'orifice de soupape (19) communiquant avec le canal de communication tout ou rien (16) et pénétrant dans le canal de communication directe (17A, 17B, 18A, 18B) de sorte à produire la coupe transversale de canal nécessaire à un écoulement entre les deux, une tige de soupape (14) installée dans l'orifice de soupape (19) d'une manière qui lui permet de se déplacer librement, un élément structural de soupape (21) monté sur la tige de soupape (14) pour ouvrir et fermer le siège de soupape (25), un ressort qui agit sur la tige de soupape (14) et une paire de chambres (38, 45), **caractérisée en ce que** la soupape est une soupape régulatrice de pression (1) ; **en ce que** le corps de soupape (15) a pratiquement la même largeur que la soupape de changement (3) ; **en ce que** les chambres comprennent une chambre régulatrice de pression (38) prévue à une extrémité de la tige (14) de la soupape régulatrice de pression et une chambre de réarmement (45) prévue à l'autre extrémité de la tige (14) de la soupape régulatrice de pression, et **en ce que** la soupape comprend de plus un piston régulateur de pression (33) monté dans la chambre régulatrice de pression (38) d'une manière qui rend possible un déplacement libre et un ressort régulateur de pression (35) qui rappelle le piston régulateur de pression (33) vers la tige (14) de la soupape régulatrice de pression, un ressort de réarmement (44) monté dans la chambre de réarmement (45) de sorte que le ressort de réarmement (44) rappelle la tige (14) de la soupape régulatrice de pression vers le piston régulateur de pression (33), et au moins un orifice de guidage (23) formé à l'intérieur de la tige (14) de la soupape régulatrice de pression et un dégagement de guidage (24a, 24b) formé entre la région extérieure de la tige (14) de la soupape de pression et l'orifice (19) de la soupape régulatrice de pression, qui communiquent avec la chambre régulatrice de pression (38) et avec la chambre de réarmement (45) et qui agissent comme canaux pour guider le fluide sous pression afin de réguler la pression pour chaque chambre (38, 45).

2. Une soupape régulatrice de pression (1) selon la Revendication 1, dans laquelle le canal de communication tout ou rien (16) est un canal de communication d'alimentation qui connecte les orifices d'alimentation (5, 10) de la base (2) et la soupape de changement (3), le canal de communication tout ou rien (16) comprenant une première partie (16a) qui communique avec l'orifice d'alimentation (5) de la base (2) et qui est ouvert vers l'orifice régulateur de pression (9) et une deuxième partie (16b) qui communique avec l'orifice d'alimentation (10) de la soupape de changement (3) et qui est ouvert vers l'orifice régulateur de pression (9) en un point différent de la première partie (16a),et le canal de communication tout ou rien (16) ayant un siège régulateur de pression (25) entre les première et deuxième parties (16a, 16b), la deuxième partie (16b) communiquant avec la chambre régulatrice de pression (38) et la chambre de réarmement (45) par l'intermédiaire de l'orifice de guidage (23) et du dégagement de guidage (24a, 24b).

3. Une soupape régulatrice de pression selon la Revendication 1, dans laquelle le canal de communication tout ou rien (16) est un canal d'alimentation qui connecte les orifices d'alimentation (5, 10) à la base (2) et à la soupape de changement (3) et le canal de communication directe (au moins un) (17A, 17B, 18A, 18B) est un canal de décharge (17A, 17B) qui connecte les orifices de décharge (6A, 6B, 11A, 11B) de la base (2) et de la soupape de changement (3) à un canal de communication (52A, 52B) qui communique avec l'orifice de décharge (6A, 6B) de la soupape de changement (2) et le canal de décharge (17A, 17B) qui communique avec la chambre régulatrice de pression (38) et la chambre de réarmement (45) par l'intermédiaire de l'orifice de guidage (23) et du dégagement de guidage (24a, 24b).

4. Une soupape régulatrice de pression (1) selon l'une quelconque des revendications précédentes, dans laquelle l'orifice de guidage (23) communique avec la chambre de réarmement (45) et le dégagement de guidage (24a, 24b) communique avec la chambre régulatrice de pression (38).

5. Une soupape régulatrice de pression selon l'une quelconque des revendications précédentes, dans laquelle le piston régulateur de pression (33) a un orifice de décharge (39) pour ouvrir la chambre régulatrice de pression (38) à l'atmosphère extérieure, et des éléments structuraux (27, 41, 55, 60) pour ouvrir ou fermer l'orifice de décharge (39) sont montés à l'extrémité de la tige (20) de la soupape régulatrice de pression.
